# EUROPEAN PATENT APPLICATION

(11) **EP 0 942 380 A2**
(43) Date of publication of application: **15.09.1999**
(21) Application number: 98124498.1
(22) Date of filing: 29.12.1998
(51) Int. Cl.: G06F 17/30

(54) **Image distinguishing apparatus**

(30) Priority: 13.03.1998 JP 6282498
(71) Applicant: MATSUSHITA ELECTRIC INDUSTRIAL CO., LTD., Kadoma-shi, Osaka-fu (JP)
(72) Inventor: Yamaguchi, Tsuyoshi, Minamikawachi-gun, Osaka-fu (JP)
(74) Representative: Altenburg, Udo, Dipl.-Phys.

(57) **Abstract**

An image distinguishing apparatus (IDDA) according to the present invention comprises a feature extractor (3) for extracting image feature data (Sf) from image data (Si) to be distinguished which is supplied from an image data source (1), an image pattern database equipment (5) which is constituted by image feature judgment data (Ss) produced by extracting, with respect to a plurality of reference original images having image features to be a criterion for distinguishing a predetermined image group (C), the image features, and an image pattern distinguisher (7) for finding the similarity (DFV(Ck, i)) between the image feature data (Sf) and each of the image feature judgment data (Ss). The image pattern distinguisher (7) further finds a code (Ck) for specifying the image feature judgment data (Ss) which is highest in the similarity (DFV(Ck, i)) to the image feature data (Sf) as image distinguishable information (Sid) of the image data (Si). As a result, inputted images can be distinguished and classified on a predetermined criterion.

## Description

### BACKGROUND OF THE INVENTION

### Field of the Invention

The present invention relates generally to a system for distinguishing images represented by digital image data as well as classifying the distinguished images depending on the contents thereof. More specifically, it relates to an image distinguishing apparatus for producing distinguishable information for classifying inputted image data.

### Description of the Background Art

In recent years, as a storage such as a semiconductor memory or a hard disk drive is increased in capacity and is decreased in cost, the opportunity to process relatively large amount of digital image data using an image processor utilizing a computer has been increased. For example, when the digital image data (hereinafter referred to as "image data") is stored in a hard disk drive on a personal computer system, inputted image data has been previously selected and stored upon closely examining the contents of an image represented by the image data. Since a large amount of image data has been inputted at high speed in recent years, however, there has been no sufficient time to previously select the image data or closely examine the contents thereof. Therefore, a method of storing the inputted image data in the hard disk drive for the time being without distinguishing and classifying the image data.

In the above-mentioned personal computer system, it is necessary to judge and classify the contents of the image after storing the inputted image data while reproducing the stored image data and fully confirming the image. However, the amount of the stored image data becomes enormous as the image data is inputted, so that a time load is too heavy to classify the image data after storing the image data. Further, the image data is more ambiguous, as compared with information such as characters. In classifying the image data, therefore, such uniform classification that a criterion for judging the image data is constant is difficult, thereby forcing a significantly heavy mental burden on a worker.

The present invention has been made in view of the above-mentioned problems, and has an object to provide an image distinguishing apparatus for outputting distinguishable information for automatically classifying inputted image data according to the features of the image data. Another object is to provide an image distinguishing apparatus capable of always distinguishing, by adding or reforming a criterion for automatically classifying image data, images represented by inputted image data with high precision on an optimized criterion for automatic classification. A still another object is to provide an image distinguishing apparatus for distinguishing images at high speed.

### SUMMARY OF THE INVENTION

A first aspect of the present invention is directed to an image distinguishing apparatus for distinguishing and classifying inputted images on a predetermined criterion, comprising
an image data source for supplying image data which is image information of an image to be distinguished,
an image feature extractor for extracting the features of the image to produce first feature vector data on the basis of the image data,
a database equipment for storing an image pattern database which is composed of image feature data each having second feature vector data produced by extracting image features from a plurality of reference images and a code(Ck) for specifying the second feature vector data, the image feature distinguishing images belonging to an image group having a certain common image feature from images belonging to another image group;
an image data comparator for finding the similarity between the first feature vector data and each of the plurality of second feature vector data, and
an image distinguisher for outputting the code of the image feature data whose second feature vector data is highest in the similarity to the first feature vector data as image distinguishable information of the image data.

As described above, in the first aspect of the present invention, the inputted images can be classified on a stable criterion by comparing previously found image feature judgment data to be a criterion with the image feature data of the inputted image, to find the similarity therebetween, and distinguishing the image data using a classification code for specifying the image feature judgment data which is highest in the similarity to the image feature data.

A second aspect of the present invention is characterized in that in the first aspect, the image data comparator comprises
a distance-between-feature vectors measurement equipment for calculating the distance between the first feature vector data and the second feature vector data and outputting the distance as a distance between feature vectors, and the smaller the distance between feature vectors is, the higher the similarity is.

As described above, in the second aspect of the present invention, it is judged that when the distance between feature vectors in the image feature judgment data of the image feature data of the inputted image is small, the similarity therebetween is high, so that the inputted images can be distinguished and classified on an objective criterion.

A third aspect of the present invention is characterized in that in the second aspect, the image data comparator further comprises
a similarly judger for judging, when the distance between feature vectors is not more than a predetermined value, that the second feature vector data is similar to the first feature vector data.

As described above, in the third aspect of the present invention, the similarity is judged only when the distance between feature vectors which is a criterion for similarity judgment is not more than a predetermined threshold, so that the degree of the similarity can be managed.

A fourth aspect of the present invention is characterized in that in the third aspect, the image data comparator further comprises
a similarity feature data detector for arranging the distances between feature vectors in ascending order of their values, and outputting a code of the distance between feature vectors at the top as the image distinguishable information.

As described above, in the fourth aspect of the present invention, it is possible to judge whether or not the setting of the feature vectors of the image feature judgment data is suitable by comparing the distances between the feature vectors arranged in ascending order of their values and the inputted image.

A fifth aspect of the present invention is characterized by further comprising, in the first aspect, an image pattern database reformer for adding to reform, when the second feature vector data similar to the first feature vector data does not exist, the first feature vector data in the image pattern database.

As described above, in the fifth aspect of the present invention, when the inputted image cannot be distinguished because the image feature judgment data stored in the image pattern database is insufficient, the image pattern database can be reformed by adding the image feature data of the inputted image which cannot be distinguished as image feature judgment data in the image pattern database.

A sixth aspect of the present invention is characterized in that in the first aspect, the image data comparator holds the range of a valid value with respect to each of feature vector terms of the first feature vector data.

As described above, in the sixth aspect of the present invention, the image feature data can be effectively distinguished in the image pattern database by holding each of feature vectors of the image feature judgment data in a valid range.

A seventh aspect of the present invention is characterized in that in the sixth aspect, the image comparator does not calculate the similarity when each of the feature vector terms of the first feature vector data is outside the range of the valid value.

As described above, in the seventh aspect of the present invention, when the image feature data is outside a distinguishable range of the image feature judgment data, the similarity is prevented from being uselessly calculated, to improve the processing efficiency.

An eighth aspect of the present invention is directed to an image distinguishing method for distinguishing and classifying inputted images on a predetermined criterion, comprising the steps of
inputting image data which is image information of an image to be distinguished,
extracting the features of the image to produce first feature vector data on the basis of the image data,
calculating, in an image pattern database which is composed of image feature data each having second feature vector data produced by extracting, with respect to each of a plurality of reference images having image features to be a criterion for distinguishing an image group to which images having a certain common image feature belong from the other image group, the image features of the reference image and a code for specifying the second feature vector data, the similarity between each of the plurality of second feature vector data and the first feature vector data, and
outputting the code of the image feature data having the second feature vector data which is highest in the similarity to the first feature vector data as image distinguishable information of the image data.

As described above, in the eighth aspect of the present invention, the inputted images can be classified on a stable criterion by comparing previously found image feature judgment data to be a criterion with the image feature data of the inputted image, to find the similarity therebetween, and distinguishing the image data using a classification code for specifying the image feature judgment data which is highest in the similarity to the image feature data.

A ninth aspect of the present invention is directed to a recording medium having a computer program for controlling an image distinguishing apparatus for distinguishing and classifying inputted images on a predetermined criterion recorded thereon, the computer program realizing an operational environment comprising the steps of
inputting image data which is image information of an image to be distinguished,
extracting the features of the image to produce first feature vector data on the basis of the image data,
calculating, in an image pattern database which is composed of image feature data each having second feature vector data produced by extracting, with respect to each of a plurality of reference images having image features to be a criterion for distinguishing an image group to which images having a certain common image feature belong from the other image group, the image features of the reference image and a code for specifying the second feature vector data, the similarity between each of the plurality of second feature vector data and the first feature vector data, and
outputting the code of the image feature data having the second feature vector data which is highest in the similarity to the first feature vector data as image distinguishable information of the image data.

As described above, in the ninth aspect of the present invention, the operations of the image distinguishing apparatus can be simply optimized only by replacing the original recording medium with a recording medium having an improved program recorded thereon as required.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing an image distinguishing apparatus according to a first embodiment of the present invention;
Fig. 2 is a schematic view showing the structure of an image pattern database stored in an image pattern database equipment shown in Fig. 1;
Fig. 3 is a flow chart showing main operations of the image distinguisher shown in Fig. 1;
Fig. 4 is a flow chart showing detailed operations in an image pattern distinguishing sub-routine shown in Fig. 3;
Fig. 5 is a block diagram showing an image distinguisher according to a second embodiment of the present invention:
Fig. 6 is a flow chart showing operations of the image distinguishing apparatus shown in Fig. 5;
Fig. 7 is a flow chart showing detailed operations in an image pattern distinguishing and image pattern database reforming sub-routine shown in Fig. 6;
Fig. 8 is a flow chart showing detailed operations in the image pattern database reforming sub-routine shown in Fig. 7;
Fig. 9 is an explanatory view of valid vector information provided in an image pattern distinguisher according to a third embodiment of the present invention;
Fig. 10 is a flow chart showing detailed operations in an image pattern distinguishing sub-routine of the image distinguishing apparatus according to the third embodiment of the present invention;
Fig. 11 is a flow chart showing detailed operations in an image feature data evaluating sub-routine shown in Fig. 10;
Fig. 12 is a flow chart showing detailed operations in an image pattern distinguishing and image pattern database reforming sub-routine of the image distinguisher according to the third embodiment of the present invention;
Fig. 13 is a block diagram showing an automatic image data classification system according to a fourth embodiment of the present invention;
Fig. 14 is an explanatory view showing an initial input screen displayed on a display device shown in Fig. 13;
Fig. 15 is an explanatory view showing an automatic classification confirmation screen displayed on the display device shown in Fig. 13; and
Fig. 16 is an explanatory view showing a classification name input screen displayed on the display device shown in Fig. 13.

### DESCRIPTION OF THE PREFERRED EMBODIMENTS

Embodiments of the present invention will be described in detail while referring to the drawings.

### (First Embodiment)

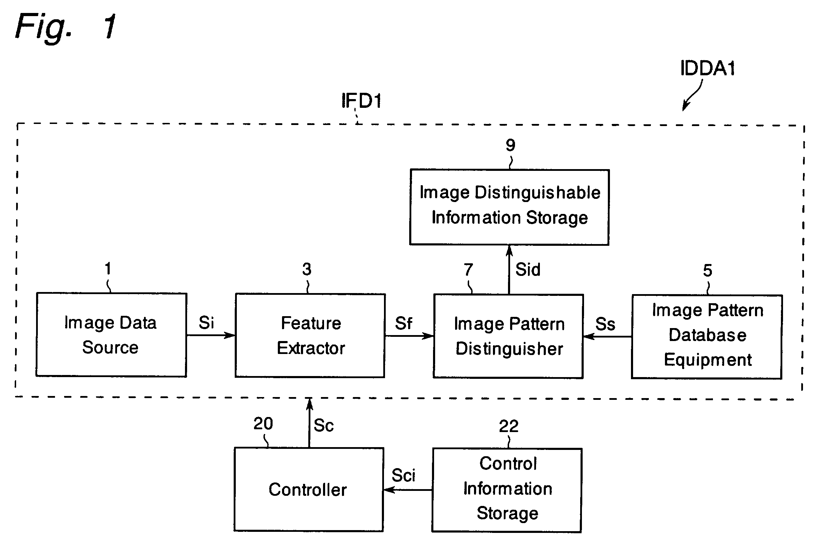

Referring now to Figs. 1, 2, 3 and 4, description is made of an image distinguishing apparatus according to a first embodiment of the present invention. As shown in Fig. 1, an image distinguishing apparatus IDDA1 according to the present embodiment comprises an image data source 1, a feature extractor 3, an image pattern database equipment 5, an image pattern distinguisher 7, an image distinguishable information storage 9, a controller 20, and a control information storage 22. The image data source 1 is preferably a supply source of digital image data (hereinafter referred to as "image data") Si, for example, a CD-ROM, a television set, and image broadcasting. However, the image data source 1 may be a device for scanning an original image to produce image data Si, for example, an image scanner.

The feature extractor 3 is connected to the image data source 1, to extract the features of an image represented by the inputted image data Si to produce image feature data Sf. The image feature data Sf is mainly composed of various types of vector data representing the features of the image represented by the image data Si.

The image pattern database equipment 5 stores image feature data Sf(C, j) produced by extracting, with respect to a plurality of image data Si(C, j) previously prepared so as to be a criterion for judging image features, the respective image features of images represented by the image data as image feature judgment data Ss(C, j), to construct and store an image pattern database IPDB which is constituted by the image feature judgment data Ss(C, j). C is a classification code for classifying image groups, a plurality of image data having common features belonging to each of the image groups, and j is a code for distinguishing each of the plurality of image data belonging to the image group defined by the classification code C. Both C and j are arbitrary positive integers.

Each of the image feature judgment data Ss(C, j) constituting the image pattern database IPDB is constituted by an image feature vector portion FV and a classification code C. The image feature vector portion FV is constituted by a plurality of feature vector terms VjnC. Both j and n are arbitrary positive integers. Feature vector elements V11C to VjnC in the feature vector terms VjnC are respectively presentations of parts representing the features of the entire image by vectors. By adjusting the position where each of the vectors is set in the image, the set number of the vectors, and the weighting of each of the vectors, desired image features can be extracted as an image pattern by the image feature judgment data Ss(C, j).

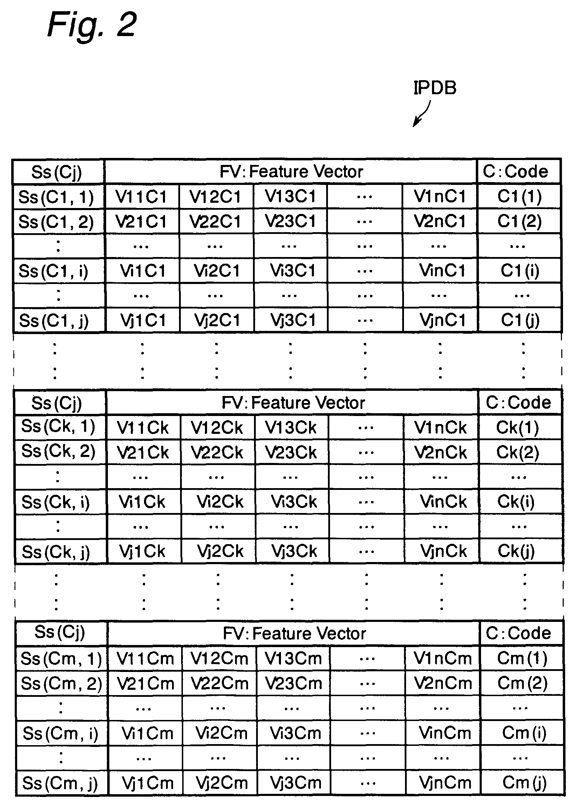

In the upper column of Fig. 2, j image feature judgment data Ss(C1, 1) to Ss(C1, j) belonging to a classification code C1 are schematically shown. That is, the first image feature judgment data Ss(C1, 1) in an image group belonging to the classification code C1 includes n image feature vectors V11C1 to V1nC1, and is assigned a corresponding classification code C1(1). The i-th image feature judgment data Ss(C1, i) has n feature vector elements Vi1C1 to VinC1, and is assigned a classification code C1(i). i is an integer which is not less than one nor more than j. Similarly, the last image feature judgment data Ss(C1, j) belonging to the classification code C1 has n feature vector elements VjlC1 to VjnC1, and is assigned a classification code C1(j).

In the meddle column of Fig. 2, j image feature judgment data Ss(Ck, 1) to Ss(Ck, j) belonging to a classification code Ck are schematically shown. That is, the arbitrary image feature judgment data Ss(Ck, i) in an image group belonging to the classification code Ck has n feature vector elements Vj1Ck to VjnCk, and is assigned a classification code Ck(j), similarly to the image feature judgment data Ss(C1, i) belonging to the classification code C1.

Furthermore, in the lower column of Fig. 2, j image feature judgment data Ss(Cm, 1) to Ss(Cm, j) belonging to a classification code Cm are schematically shown. That is, the image feature judgment data Ss(Cm, i) in an image group belonging to the classification code Cm has n feature vector elements Vj1Cm to VjnCm, and is assigned a classification code Cm(i), similarly to the image feature judgment data Ss(Ck, i) belonging to the classification code Ck. In this case, 1 ≦ i ≦ j, and m is a positive integer corresponding to the total number of image groups.

For convenience, in the description of the specification, the arbitrary image feature judgment data Ss belonging to each of the groups shall be hereinafter represented by Ss(Ck, i), the feature vector elements constituting each of the image feature judgment data Ss(Ck, i) shall be hereinafter represented by VinCk, and each of the classification codes C shall be hereinafter represented by Ck(i).

The above-mentioned image feature vector can be produced by three types of methods listed below, as an example.

When an inputted image is a still image, a plurality of (about 3 to 7) pixels spaced approximately 10 pixels apart from each other are first sampled at five points on a screen (the four corners and the center of the screen). An average of the distances between color codes is found with respect to the sampled pixels, and is taken as a five-dimensional vector. An average of the color codes is found with respect to pixels in the horizontal direction (on one line) every about five lines, and is taken as an n-dimensional vector. As a result, the flatness of the inputted image is found, to obtain elements for judging whether or not the inputted image is a natural image or an artificial image (an animation). Further, the change in the color in the vertical direction is represented by a numerical value.

On the other hand, when the inputted image is a moving image, information representing a time base is utilized in addition to information representing the above-mentioned still image. That is, color codes are found with respect to a plurality of points on the screen for each frame, and an average of the distances between the color codes is found for the same position with respect to 30 frames, and is taken as an n-dimensional vector. As a result, the averages of the distances are compared with each other, to calculate a frame rate, thereby making it possible to judge a movie and an animation.

Returning to Fig. 1, the image pattern distinguisher 7 is connected to both the feature extractor 3 and the image pattern data equipment 5, to compare the image feature data Sf inputted from the feature extractor 3 with the image feature judgment data Ss in the image pattern database IPDB stored in the image pattern database equipment 5. The image pattern distinguisher 7 outputs, when it finds the image feature judgment data Ss(Ck, i) similar to the image feature data Sf, the classification code Ck(i) of the image feature judgment data Ss as image distinguishable information Sid of the image feature data Sf.

The image distinguishable information storage 9 is connected to the image pattern distinguisher 7, to store the image distinguishable information Sid. The image data source 1, the feature extractor 3, the image pattern database equipment 5, the image pattern distinguisher 7, and the image distinguishable information storage 9 constitute an image feature distinguishing apparatus IFDI.

The controller 20 produces a control signal Sc on the basis of control information Sci stored in the control information storage 22, to control the operations of the entire image distinguishing apparatus IDDA1, including the image feature distinguishing apparatus IFDI. The controller 20 is preferably a computer composed of a CPU and the like, and the control information storage 22 is a device capable of reading and storing a control program which is control information supplied by a recording medium such as a CD-ROM.

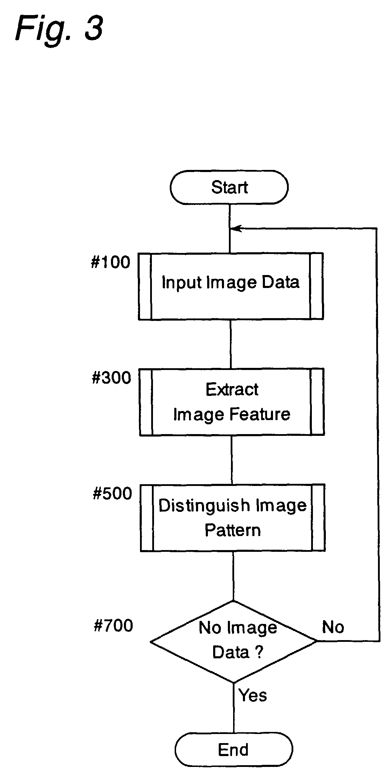

Referring to Fig. 3, description is now made of main operations of the image distinguishing apparatus IDDA1. The operations of the image distinguishing apparatus IDDA1 mainly comprise four sub-routines (steps #100, #300, #500, and #700). When the operations of the image distinguishing apparatus IDDA1 are started, the image data Si is first inputted to the feature extractor 3 from the image data source 1 at the step #100.

At the step #300, the feature extractor 3 calculates a plurality of feature amounts representing the features of the image data Si inputted from the image data source 1, to produce the image feature data Sf. Each of the feature amounts is found by first normalizing the size of the inputted image data, sub-dividing the image data into lattice-shaped regions, and then calculating statical information such as the gradation distribution, the contrast, and the color with respect to each of the lattice-shaped regions. The feature amount is represented by h feature vectors VhC (h is a positive integer of not less than one, and is preferably equal to n) in the same format as that of the feature vector elements V in the image feature vector portion FV shown in Fig. 2. The classification code C is not assigned to the image feature data Sf thus found.

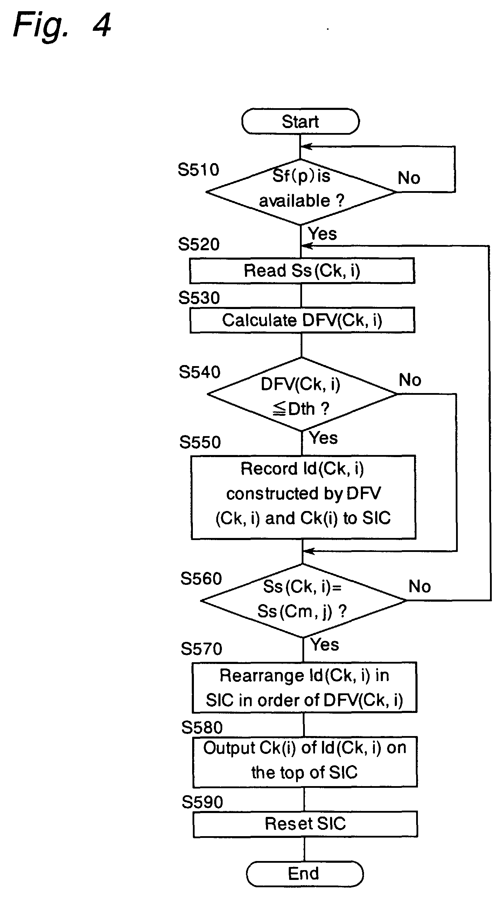

At the step #500, when the image feature data Sf is outputted from the feature extractor 3, the image pattern distinguisher 7 successively reads out the image feature judgment data Ss(C, j) from the image pattern database IPDB stored in the image pattern database equipment 5. The image pattern distinguisher 7 further compares each of the feature vector elements VinCk constituting the image feature judgment data Ss(C, j) read out with the feature vector elements VhC constituting the image feature data Sf. The image pattern distinguisher 7 detects image data Si(C, j) which is judged to be similar to the image feature data Sf, to produce image distinguishable information Sid on the basis of its classification code C. Image pattern distinguishing processing at the step #500 will be described in detail later with reference to Fig. 4.

At the step #700, it is judged whether or not the image data Si whose image pattern should be distinguished remains in the image data source 1. When the answer is in the negative, the processing is terminated. On the other hand, when the answer is in the affirmative, the procedure is returned to the step #100, to repeat the above-mentioned processing until it is judged that the answer is in the negative at the step #700 through the steps #200, #300, and #500.

Referring to Fig. 4, description is now made of the details of the image pattern distinguishing sub-routine at the step #500 by the image pattern distinguisher 7. When the image distinguishing apparatus IDDA1 terminates the operations in the image feature extracting sub-routine at the step #300, the image pattern distinguisher 7 monitors output of the image feature data Sf from the feature extractor 3 at the step S510. That is, when the image feature data Sf is not detected, it is judged that the answer is in the negative, to repeat the processing at the step S510. On the other hand, when the answer is in the affirmative, the detected image feature data Sf is set as image feature data Sf(p), after which the procedure advances to the subsequent step S520. p is an integer of not less than one which is incremented by one, in order to distinguish the image data Si accepted in the feature extractor 3 from the image data source 1, every time the image data Si is accepted. That is, when the image feature data Sf is first detected, p = 1 is set. Every time it is thereafter judged that the answer is in the negative at the foregoing step #700, p is incremented by one, for example, p = 2, p = 3, ··· every time the processing at the step #500 is repeated through the steps #100 and #300.

At the step #520, the image pattern distinguisher 7 reads out the first image feature judgment data Ss(C1, 1) out of the image feature judgment data Ss(Ck, i) stored in the image pattern database equipment 5. The procedure advances to the subsequent step S530.

At the step S530, the distance between feature vectors DFV(Ck, i) which is the distance between the feature vector data VhC of the image feature data Sf(p) detected at the step S510 and the feature vector element VinCk(V1nC1) in the feature vector portion FV of the image feature judgment data Ss(C1, 1) read out at the step S520 is calculated. The procedure advances to the subsequent step S540. When the image feature judgment data Ss(C1, 1) is read out at the step S520, as described above, it goes without saying that the distance between feature vectors DFV(C1, 1) is found.

At the step S540, it is judged whether or not the distance between feature vectors DFV(Ck, i) detected at the step S530 is not more than a predetermined reference distance Dth. The reference distance Dth is a value previously set as a criterion for judging whether or not the image features of the two image data Sf and Ss are similar to each other. That is, when the distance between feature vectors DFV is smaller than the reference distance Dth, image data Si(p) corresponding to the image feature data Sf(p) is considered to be similar to the image feature judgment data Ss(Ck, i) compared and contrasted at that time. When it is judged that the answer is in the affirmative, the procedure advances to the subsequent step S550.

At the step S550, conformable image pattern distinguishable information Id(Ck, i) composed of the distance between feature vectors DFV(Ck, i) corresponding to the classification code Ck(i) of the image feature judgment data Ss(Ck, i) similar to the image feature data Sf(p) is recorded in a similar image candidate list SIC. The procedure advances to the subsequent step S560.

On the other hand, when it is judged that the answer is in the negative, that is, the image feature data Sf(p) is not similar to the image feature judgment data Ss(Ck, i) compared and contrasted, the procedure advances to the step S560 upon skipping the step S550 at which the conformable image pattern distinguishable information Id(Ck, i) is recorded in the similar image candidate list SIC.

At the step S560, it is judged whether or not the image feature judgment data Ss(Ck, i) currently compared and contrasted is the last image feature judgment data Ss(Cm, j) in the image pattern database IPDB. That is, when the image feature judgment data Ss currently compared and contrasted is not the last image feature judgment data Ss(Cm, j) but Ss(C1, 1), for example, the image feature judgment data Ss(Ck, i) the similarity in the image pattern to the image data Si(p) of which should be judged still remains in the image pattern database IPDB. Therefore, it is judged that the answer is in the negative, after which the procedure is returned to the step S520.

At the step S520, the image feature judgment data Ss(Ck, i + 1) subsequent to the image feature judgment data Ss(Ck, i) which is an object to be compared at the step S560 is read out of the image pattern database IPDB. The processing at the foregoing steps S520, S530, S540, and S550 is repeatedly performed with respect to the image feature judgment data Ss(Ck, i + 1). When the current image feature judgment data Ss(Ck, i + 1) is not the last image feature judgment data Ss(Cm, j) at the step S560, the image feature judgment data Ss(Ck, i) the similarity in the image pattern to the image data Si(p) of which should be judged still remains in the image pattern database IPDB. Therefore, it is judged that the answer is in the negative, after which the procedure is returned to the step S520.

The processing at the steps S560, S520, S530, S540, and S550 is thus repeatedly performed, so that image feature judgment data Ss (Ck + 1, 1) is read out subsequently to the image feature judgment data Ss(Ck, j). All the image feature judgment data Ss(C1, 1) to Ss(Cm, J) in the image pattern database IPDB are read out, so that the image pattern of the image feature data Sf (p) is distinguished. As a result, at the step S550, all of the classification codes Ck(i) of the image feature judgment data Ss(Ck, i) having image features similar to the image features of the inputted image data Si(p) (the image feature data Sf(p)) as well as corresponding distances between feature vectors DFV(Ck, i) are recorded as conformable image pattern distinguishable information Id(Ck, i) in the similar image candidate list SIC. Thereafter, it is judged at the step S560 that the answer is in the affirmative, after which the procedure advances to the subsequent step S570.

At the step S570, the conformable image pattern distinguishable information Id(Ck, i) which are recorded in the similar image candidate list SIC at the step S550 are rearranged in ascending order of the values of the distances between feature vectors DFV(Ck, i). The procedure advances to the subsequent step S580.

At the step S580, the classification code Ck(i) of the conformable image pattern distinguishable information Id(Ck, i) positioned at the top of the conformable image pattern distinguishable information rearranged at the step S570 in the similar image candidate lists SIC is outputted as image distinguishable information Sid. When no conformable image pattern distinguishable information Id is recorded in the similar image candidate list SIC, an invalid value is outputted as the image distinguishable information Sid. The procedure then advances to the step S590.

At the step S590, the similar image candidate list SIC is reset, so that the recorded conformable image pattern distinguishable information Id(Ck, i) is erased. The image recognition of the image feature data Sf(p) is thus completed, to terminate the processing in the routine. When it is judged that the answer is in the affirmative at the foregoing step #700, the routine is carried out with respect to the subsequent image data Si(p + 1).

As described in the foregoing, the image distinguishing apparatus IDDA1 according to the present embodiment has the image data source 1 for inputting an image, the image pattern database equipment 5 holding image feature judgment data Ss produced by previously extracting the features of a plurality of images to be a criterion as an image pattern database IPDB, and the image pattern distinguisher 7 for calculating the similarities of two image data Si to the images to be a criterion. In the image distinguishing apparatus IDDA1, the image data Si inputted from the image data source 1 and the image feature judgment data Ss in the image pattern database IPDB are successively compared with each other in the image pattern distinguisher 7, and a classification code C corresponding to the most similar image pattern is outputted as image distinguishable information Sid of the inputted image data Si, so that the image data Si can be automatically classified on a uniform criterion for judgment.

At the step S570, the distance between feature vectors DFV(Ck, i) taking the minimum value out of all the distances between feature vectors DFV(Ck, i) may be extracted instead of rearranging the conformable image pattern distinguishable information Id(Ck, i) in ascending order of the values of the distances between feature vectors DFV(Ck, i). Consequently, the processing speed can be improved.

By arranging the conformable image pattern distinguishable information Id(Ck, i) in ascending order of the values of the distances between feature vectors DFV(Ck, i) as in the present embodiment, a user can examine whether or not the setting of the feature vector elements VinCk constituting the image feature vector portion FV is not erroneous, and adjust the feature vector elements VinCk in order to give distinguishing capabilities desired by the user. That is, in the present invention, the smaller the distance between feature vectors DFV(Ck, i) is, the more similar the image feature judgment data Ss is to the image feature data Sf, that is, the image data Si.

However, it is extremely difficult to previously calculate the actual features of images theoretically and set the feature vector elements VinCk such that the similarities between the different images can be detected in a desired order. At the step S570, it is judged whether or not the setting of the feature vector elements VinCk is proper by comparing the image data Si prepared as a criterion for judgment corresponding to the image feature judgment data Ss(Ck, i) arranged in ascending order of the values of the distances between feature vectors DFV(Ck, i). Further, the precision of the image feature vector portion FV in the image pattern database IPDB can be increased by suitably correcting the respective feature vector elements VinCk so as to adjust the value of the distance between feature vectors DFV(Ck, i) such that the image data Si prepared as a criterion for judgment are rearranged in the order of similarity desired by the user.

### (Second Embodiment)

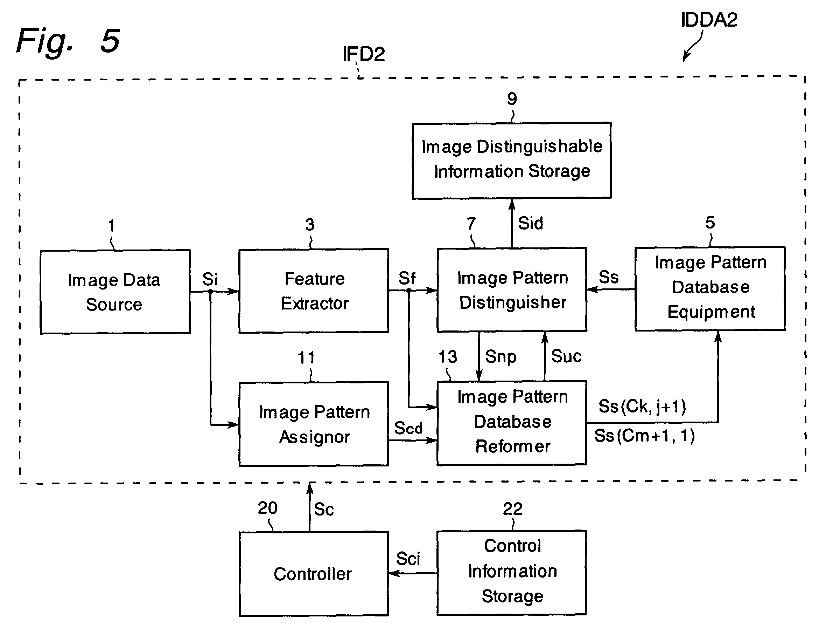

Referring to Figs. 5, 6, 7 and 8, description is made of an image distinguishing apparatus according to a second embodiment of the present invention. As shown in Fig. 5, an image distinguishing apparatus IDDA2 according to the present embodiment is obtained by replacing the image feature distinguishing apparatus IFD1 in the image distinguishing apparatus IDDA1 shown in Fig. 1 with an image feature distinguishing apparatus IFD2. The image feature distinguishing apparatus IFD2 has a structure in which an image pattern assignor 11 and an image pattern database reformer 13 are newly added to the image feature distinguishing apparatus IFD1, and the image pattern distinguisher 7 is replaced with an image pattern distinguisher 70. In the present embodiment, the image pattern distinguisher 70 produces, when there is no image feature judgment data Ss corresponding to image feature data Sf of inputted image data Si in an image pattern database IPDB in an image pattern database equipment 5, a non-conformable pattern signal Snp indicating the fact. The image pattern database reformer 13 starts reforming processing of the image pattern database upon receipt of the non-conformable pattern signal Snp. In this sense, the non-conformable pattern signal Snp is a driving signal Snp for driving the image pattern database reformer 13.

The image pattern assignor 11 is connected to an image data source 1, to display the inputted image data Si, and for a user to enter classification code data Scd for defining a classification code Ck which is image distinguishable information corresponding to an image represented by the image data Si while confirming the displayed image data Si.

The image pattern database reformer 13 is connected to a feature extractor 3, the image pattern assignor 11, and the image pattern distinguisher 70, to receive input of the image feature data Sf, the classification code data Scd, and the non-conformable pattern signal Snp, respectively. The image pattern database reformer 13 produces image feature judgment data Ss(Ck, j + 1) or Ss(Cm + 1, 1) to be added to the image pattern database IPDB in the image pattern database equipment 5 on the basis of the image feature data Sf and the classification code data Scd which is image distinguishable information by the non-conformable pattern signal Snp which is a driving signal from the image pattern distinguisher 70. The image pattern database reformer 13 is further connected to the image pattern database equipment 5, to supply the produced image feature judgment data Ss(Ck, j + 1) or Ss(Cm + 1, 1) to the image pattern database equipment 5, and reform the contents of the image pattern database IPDB.

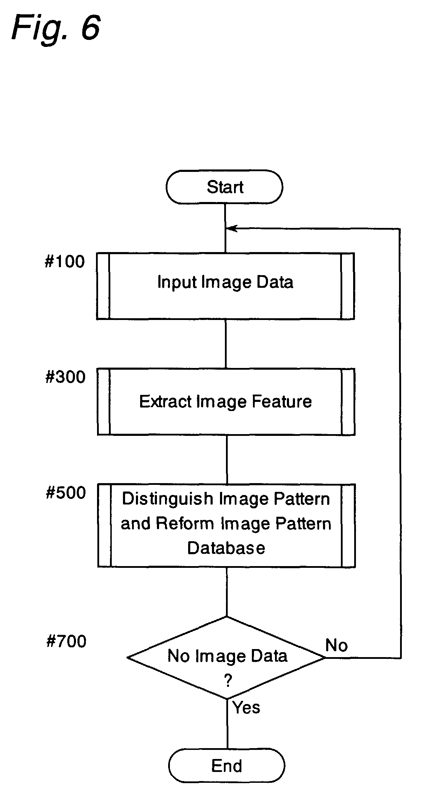

Referring now to Fig. 6, description is made of operations of the image distinguishing apparatus IDDA2. The operations of the image distinguishing apparatus IDDA2 are the same as the operations of the image distinguishing apparatus IDDA1 shown in Fig. 3 except that the image pattern distinguishing sub-routine at the step #500 is replaced with an image pattern distinguishing and image pattern database reforming sub-routine at the step #510.

That is, at the step #510, image feature judgment data Ss(C, j) are successively read out from the image pattern database IPDB depending on output of the image feature data Sf, as in the image pattern distinguishing sub-routine at the step #500 in the image distinguishing apparatus IDDA1. All image data Si(C, j) which are judged to be similar to the image feature data Sf are detected, to produce image distinguishable information Sid on the basis of its classification code C.

In the present embodiment, however, the processing at the step #510 greatly differs from the processing at the step #500 in that when there is no image data Si(C, j) which is judged to be similar to the image feature data Sf, the image feature judgment data Ss(Ck, j + 1) or Ss(Cm + 1, 1) corresponding to the image feature data Sf is added in the image pattern database IPDB to reform the database.

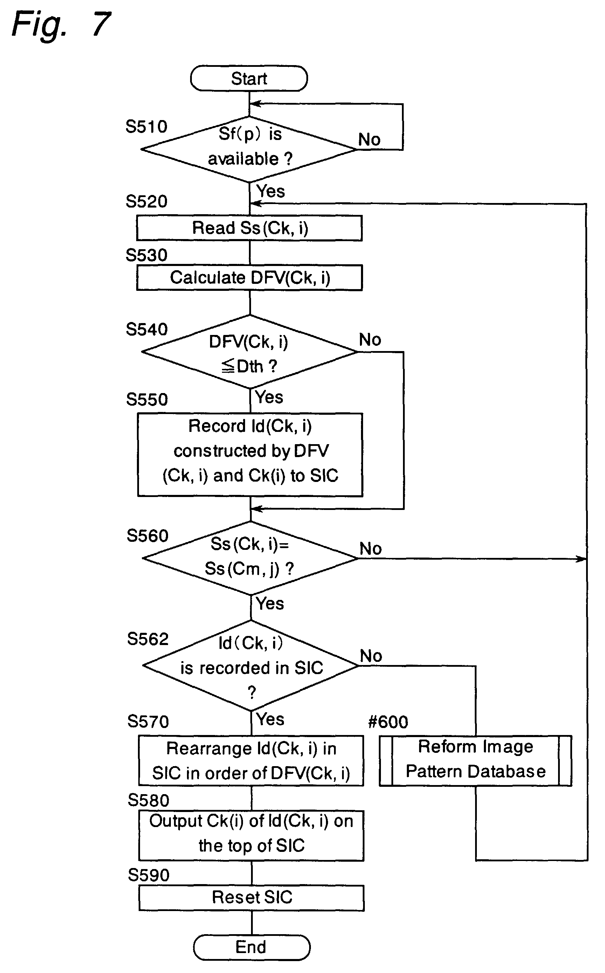

Referring now to Fig. 7, the image pattern distinguishing and image pattern database reforming sub-routine at the foregoing step #510 will be described in detail. In the operations of the image distinguishing apparatus IDDA2 at the step #510, the step S562 is newly added between the step S560 and the step S570 in the flow chart shown in Fig. 4, and a sub-routine #600 by which the procedure is returned from the added step S562 to the step S520.

After the operations at the steps S510, S520, S540, S550, and S560 already described with reference to Fig. 4, the procedure advances to the step S562 newly added.

At the step S562, it is judged whether or not conformable image pattern distinguishable information Id(Ck, i) is recorded in a similar image candidate list SIC. That is, it is judged whether or not image feature judgment data Ss(Ck, i) similar to image feature data Sf(p) in inputted image data Si(p) is included in the image pattern database IPDB. When the answer is in the affirmative, the procedure is terminated through the foregoing steps S570, S580, and S590. On the other hand, when the answer is in the negative, the image pattern distinguisher 70 produces the driving signal Snp for driving the image pattern database reformer 13. The procedure then advances to an image pattern database reforming sub-routine at the step #600 newly added.

At the step #600, the image pattern database reformer 13 reforms the image pattern database IPDB. The image pattern database reformer 13 outputs a database reformation completion notification signal Suc when the reformation of the image pattern database IPDB is completed, to give notification that the reformation of the image pattern database IPDB is completed. The image pattern distinguisher 70 repeats the processing starting at the step S520 upon receipt of the database reformation completion notification signal Suc.

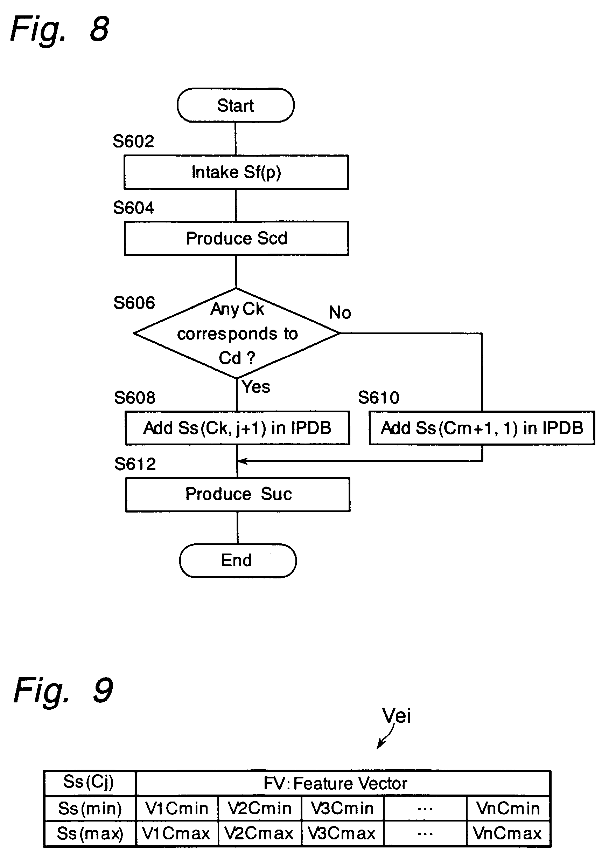

Referring to Fig. 8, description is now made of the details of the image pattern database reforming processing in the image pattern database reformer 13 at the step #600. The image pattern database reformer 13 starts processing at the step S602 upon receipt of the driving signal Snp outputted upon judging at the step S562 that the answer is in the negative.

At the step S602, the image pattern database reformer 13 receives input of the image feature data Sf (p) of the inputted image (Si) which is not judged to be similar to a feature represented by any image feature judgment data Ss(Ck, j) in the image pattern database IPDB by the image pattern distinguisher 70. The image data Si which is not similar to a feature represented by any image feature judgment data Ss(Ck, i) in the image pattern database IPDB is referred to as undistinguishable image data Sim. The procedure then advances to the step S604.

At the step S604, an image represented by undistinguishable image data Sim(p) is displayed. The user determines which of groups defined by classification codes Ck in the image pattern database IPDB shown in Fig. 2 is one to which the undistinguishable image data Sim(p) belongs while seeing the displayed image. When it is judged that it does not belong to any of the existing classification codes Ck in the image pattern database IPDB from the features of the displayed image, a new classification code Cd is set and inputted. The user operates the image pattern assignor 11, to produce input classification code data Scd representing the determined classification code Cd. The procedure then advances to the step S606.

At the step S606, the image pattern database equipment 5 is searched for a group having a classification code Ck corresponding to the classification code Cd determined at the step S604. When such an image classification group exists, it is judged that the answer is in the affirmative, after which the procedure advances to the step S608.

At the step S608, the image feature data Sf(p) representing the features of the image data Si(p) is added in the image pattern database IPDB as image feature judgment data Ss(Ck,j+1) behind the last image feature judgment data Ss(Ck,j) belonging to the image group having the classification code Ck equal to the classification code Cd determined at the step S604. The procedure then advances to the step S612.

On the other hand, when the answer is in the negative at the step S606, that is, there exists no such image group corresponding to the classification code Cd, the procedure advances to the step S610.

At the step S610, a classification code Cm + 1 positioned subsequently to the last classification code Cm in the image pattern database IPDB is newly set in place of the classification code Cd determined at the step S604. The image feature data Sf(p) representing the features of the image data Si(p) is added in the image pattern database IPDB as the first image feature judgment data Ss(Cm+1,1) belonging to the group Cm + 1 newly set and as new image feature judgment data Ss(Ck,j+1) in the existing group Ck. The procedure then advances to the step S612.

At the step S612, a database reformation completion notification signal Suc representing the termination of the reformation of the image pattern database is produced, and the processing is terminated.

As described in the foregoing, when image data (Sim) which cannot be distinguished in the image pattern database equipment 5 is inputted, image distinguishable information is designated by the image pattern assignor 11 each time. When similar image data is hereinafter inputted, therefore, an image represented by the image data can be distinguished.

In the foregoing steps S608 and S610, the image feature judgment data Ss(Ck, j+1) or Ss(Cm+1, 1) is set as image feature judgment data for defining the undistinguishable image data Sim. However, it may be not only set behind the existing image feature judgment data Ss(Ck,j) or Ss(Cm, 1) but also inserted between the existing image feature judgment data Ss(Ck,i) as required. Further, it may be replaced with one of the existing image feature judgment data Ss(Ck,i).

### (Third Embodiment)

An image distinguishing apparatus according to a third embodiment of the present invention will be described with reference to Figs. 9, 10, 11, and 12. Although an image distinguishing apparatus IDDA3 (not shown) according to the present embodiment has basically the same structure as those of the image distinguishing apparatus IDDA1 and the image distinguishing apparatus IDDA2 described with reference to Figs. 1 and 5, it slightly differs in the operations of the image pattern distinguishers 7 and 70. In this sense, the image distinguishing apparatus IDDA3 is obtained by replacing the image pattern distinguisher 7 in the image distinguishing apparatus IDDA1 with an image pattern distinguisher 7R and replacing the image pattern distinguisher 70 in the image distinguishing apparatus IDDA2 with an image pattern distinguisher 70R. For simplicity of the specification, however, the structure of the image distinguishing apparatus IDDA3 will be described below by utilizing the block diagrams of Figs. 1 and 5.

Before describing the operations of the image pattern distinguishers 7R and 70R, description is made of valid vector information in the image pattern distinguishers 7R and 70R with reference to Fig. 9. Valid vector information Vei has a structure shown in Fig. 9, and is constituted by a minimum value vector VnCmin and a maximum value vector VnCmax. The minimum value vector VnCmin holds the minimum value of valid values of feature vector elements VinCk in all image feature judgment data Ss(C1, 1) to Ss(Cm, j) constituting an image pattern database IPDB. Similarly, the maximum value vector VnCmax holds the maximum value of the valid values of the feature vector elements VinCk in all the image feature judgment data Ss(C1, 1) to Ss(Cm, j). That is, the valid vector information Vei means an allowable range of feature vector terms VjnC of image feature data Sf which can be distinguished by an image pattern database IPDB, that is, a valid distinguishable range. It goes without saying that when the image pattern database IPDB is reformed in the image distinguishing apparatus IDDA2 according to the second embodiment, the valid vector information Vei is also properly reformed.

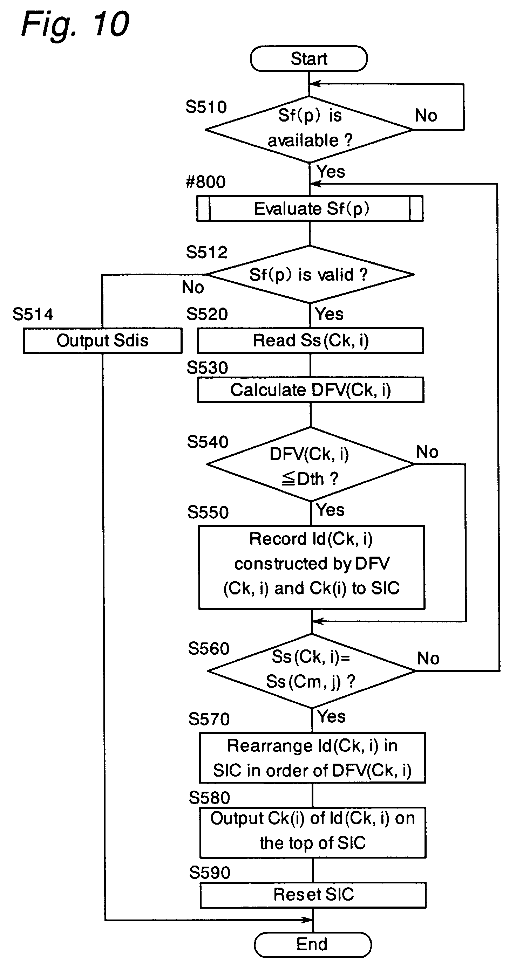

Referring first to a flow chart of Fig. 10, description is made of operations in a case where the present embodiment is applied to the image distinguishing apparatus IDDA1. As shown in Fig. 10, in operations of the image pattern distinguisher 7R in the present embodiment, processing at the step #800 and the step S512 is newly provided between the step S510 and the step S520 in the flow chart of Fig. 4. The step #800 is an image feature data evaluating sub-routine for making evaluation as to whether or not image feature data Sf(p) falls within a valid distinguishable range (valid vector information Vei) of the image pattern database IPDB. The step S514 is processing for judging whether or not the image feature data Sf(p) is valid data relating to distinction between image patterns on the basis of the results of the evaluation at the step #800.

When it is judged at the step S512 that the image feature data Sf(p) is valid, the procedure advances to the step S520. At the step S520, image patterns are distinguished, as in the first embodiment. On the other hand, when it is not judged at the step S512 that the image feature data Sf(p) is valid, the procedure advances to the step S514.

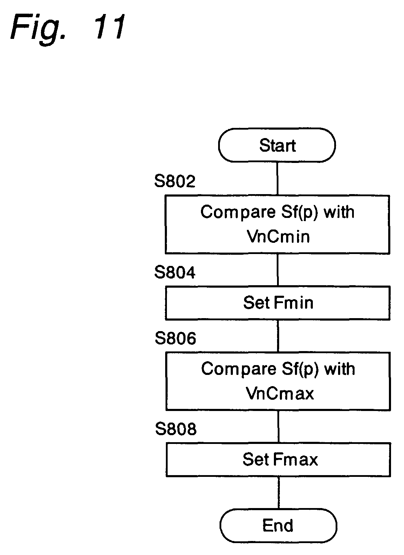

Referring now to Fig. 11, description is made of the details of the image feature data evaluating sub-routine at the step #800. The processing at the steps S512 and S514 will be simply described again after the processing at the step #800 is described in detail. The image pattern distinguisher 7R first compares, when the image feature data Sf(p) is detected at the step S510, each of the feature vector terms VjnC of the image feature data Sf(p) from the feature extractor 3 with the minimum value vector VnCmin at the step S802. The procedure advances to the subsequent step S804.

At the step S804, when any one of the feature vector terms VjnC of the image feature data Sf(p) is smaller than the minimum value vector VnCmin as the result of the comparison at the step S802, a minimum limit flag Fmin indicating that the image feature data Sf(p) is not less than a valid distinguishable minimum limit is set to Low, that is, Fmin = 0. On the other hand, when all of the feature vector terms VjnC of the image feature data Sf(p) are larger than the minimum value vector VnCmin, the minimum limit flag Fmin is set to High, that is, Fmin = 1. The processing advances to the subsequent step S806.

At the step S806, each of the feature vector terms VjnC of the image feature data Sf(p) is compared with the maximum value vector VnCmax. The procedure advances to the subsequent step S808.

At the step S808, when any one of the feature vector terms VjnC of the image feature data Sf(p) is larger than the maximum value vector VnCmax as the result of the comparison at the step S806, a maximum limit flag Fmax indicating that the image feature data Sf(p) is not more than a valid distinguishable maximum limit is set to Low, that is, Fmax = 0. On the other hand, when all of the feature vector terms VjnC of the image feature data Sf(p) are smaller than the maximum value vector VnCmax, the maximum limit flag Fmax is set to High, that is, Fmax = 1. The processing is then terminated.

Returning to the flow chart of Fig. 10, when both the two flags Fmin and Fmax are high, that is, Fmin = 1 and Fmax = 1, it is judged that the image feature data Sf(p) is distinguishable at the step S512. The procedure then advances to the step S520.

On the other hand, when at least one of the two flags Fmin and Fmax is low, it is judged that the image feature data Sf(p) is undistinguishable. The procedure then advances to the step S514.

At the step S514, an invalid signal Sdis indicating that the image pattern of the image feature data Sf(p) is undistinguishable is outputted.

As described in the foregoing, the image pattern distinguisher 7R judges whether or not the image feature data Sf(p) of the inputted image Si(p) falls within the valid distinguishable range (valid vector information Vei) of the image pattern database IPDB before calculating the distances between the feature vectors of the inputted image and feature vector portions FV of all the image feature judgment data Ss(C1, 1) to Ss(Cm, j) constituting the image pattern database IPDB in the image pattern database equipment 5. When the image feature data Sf(p) does not fall within the valid distinguishable range, that is, is undistinguishable in the current image pattern database IPDB, the image pattern distinguishing processing is terminated. As a result, it is eventually possible to avoid such waste as to obtain the results that there is no image feature judgment data Ss(Ck, i) similar to the image feature data Sf(p) after reading out all the image feature judgment data Ss(C1, 1) to Ss(Cm, j) from the image pattern database equipment 5 and comparing each of the image feature judgment data Ss with the image feature data Sf(p). Therefore, the number of times of search of the image pattern database equipment 5 can be reduced, and the images can be further distinguished at high speed.

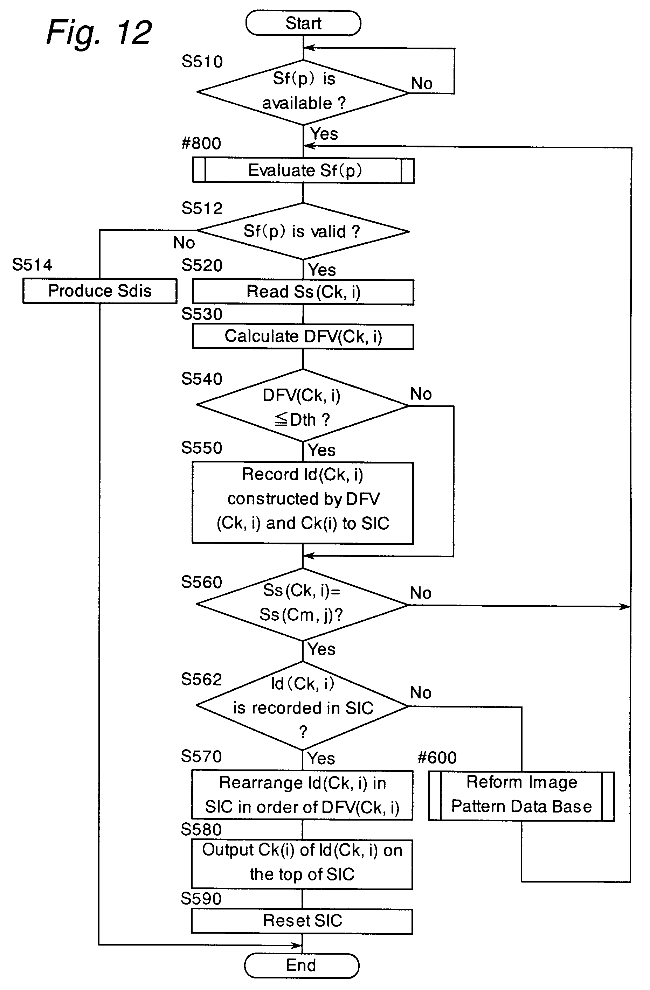

Referring now to Fig. 12, description is made of operations in a case where the present embodiment is applied to the image distinguishing apparatus IDDA2. As shown in Fig. 12, the operations of the image pattern distinguisher 70R in the present embodiment are basically the same as those in the image distinguishing apparatus IDDA1 described with reference to Fig. 10. That is, the step #800 which is an image feature data evaluating sub-routine and the step S512 for judging whether or not the image feature data Sf(p) is valid are newly provided between the step S510 and the step S520 in the flow chart shown in Fig. 7. The image feature data evaluating sub-routine at the step #800 is as already described with reference to Fig. 11. Further, processing at the step S512 and the step S514 is also the same as that described with reference to Fig. 10.

The present invention is feasible by a computer program, and can be easily carried out using another independent computer system by recording the computer program on a recording medium such as a floppy disk or a CD-ROM and transferring the computer program.

### (Fourth Embodiment)

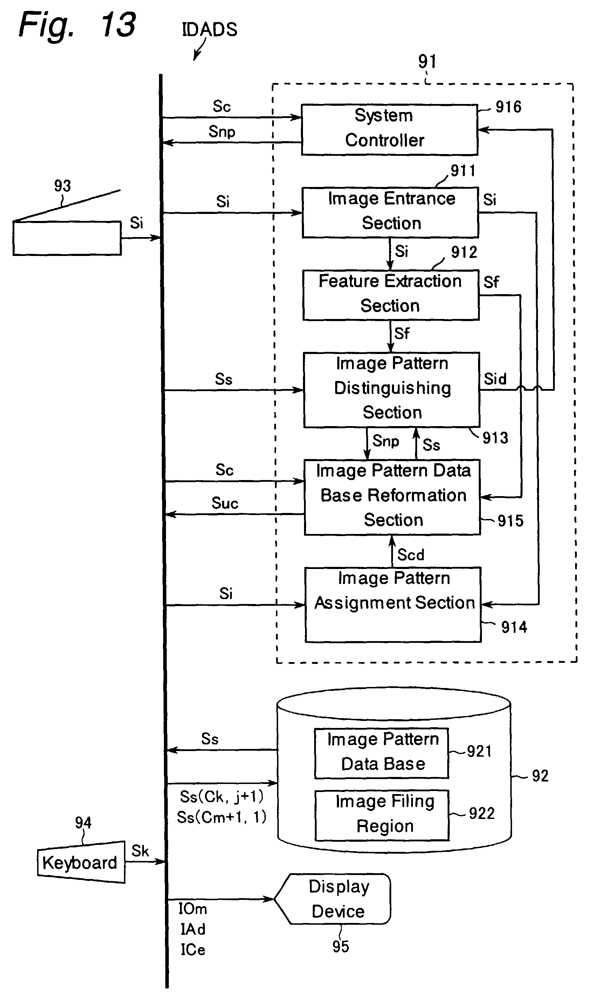

Referring to Figs. 13, 14, 15, and 16, description is made of an automatic image data classification system using an image distinguishing apparatus according to a fourth embodiment of the present invention. An automatic image data classification system IDADS according to the present embodiment comprises a CPU (Central Processing Unit) 91, an external storage 92, an image data producer 93, a keyboard 94, and a display device 95.

The CPU 91 executes programs realizing respective functions of an image entrance section 911, a feature extraction section 912, an image pattern distinguishing section 913, an image pattern assignment section 915, an image pattern database reformation section 91, and a system control section 916.

The external storage 92 comprises an image pattern database 921 and an image filing region 922. The image data producer 93 accepts a still image such as a picture, and outputs image data Si representing the accepted image to the image entrance section 911 in the CPU 91.

The keyboard 94 outputs data Sk representing a key tapped by a user to the image pattern assignment section 914. The display device 95 displays characters or images toward the user on the basis of a control signal Sc inputted from the system control section 916.

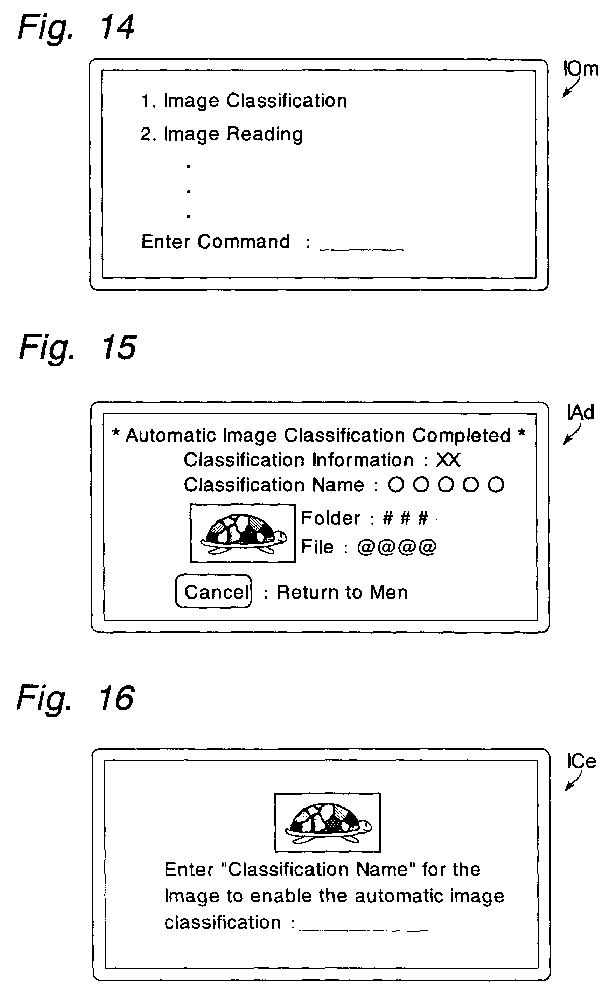

Description is made of operations in the automatic image data classification system in the embodiment constructed as described above. When the automatic image data classification system IDADS is operated, the system control section 916 displays an initial input screen IOm shown in Fig. 14 on the display device 95, and requests the user to selectively enter a command corresponding to a desired service. In the present embodiment, the automatic image data classification system IDADS can provide various types of services including image classification and image reading.

The user shall desire to utilize the image classification service for classifying image data newly inputted on the basis of the contents of an image represented by the image data. In this case, the user first sets an original image such as a picture on the image data producer 93, and then enters "1" using the keyboard 94. The system control section 916 drives the image data producer 93 depending on command selection (Sk) by the user, and accepts image data Si representing the original image. Image data Si representing a still image accepted in the image data producer 93 is sent to the image entrance section 911.

The image data Si is then outputted to the feature extraction section 912 through the image entrance section 911. The image extraction section 912 calculates a plurality of feature amounts representing the features of an image from the inputted image data Si, and outputs the feature amounts to the image pattern distinguishing section 913 as image feature data Sf which is constituted by feature vector terms VjnC of the image data Si.

The image pattern distinguishing section 913 successively reads out image feature judgment data Ss in an image pattern database IPDB stored in the image pattern database 921, and outputs a classification code C corresponding to an image pattern most similar to the image feature data Sf to the system control section 916 as image distinguishable information Sid of the image.

The system control section 916 interprets the inputted image distinguishable information Sid, and converts the image distinguishable information into a character string which is easily understood by the user, for example, a classification name. The character string obtained by the conversion, together with an image represented by the image data Si, is displayed on the display device 95, as shown on an automatic classification confirmation screen IAd in Fig. 15. When there exists no image pattern Ss similar to the image feature data Sf, a non-conformable pattern signal Snp is outputted from the image pattern distinguishing section 913, so that the image pattern database reformation section 915 is driven.

The image pattern database reformation section 915 displays on the display device 95 a message as shown on a classification name input screen ICe in Fig. 16, for example, to force the user to provide entry from the keyboard 94 . The user enters a character string (Sk) obtained by embodying distinguishable information such as a classification name corresponding to the original image data Si from the keyboard 94 in accordance with the displayed message or the like. The image pattern assignment section 914 calculates a classification code (Scd) of the distinguishable information from the inputted character string, and outputs the classification code to the image pattern database reformation section 915. The image pattern database reformation section 915 adds or reforms image feature judgment data Ss which is new or existing image pattern data in the image pattern database IPDB in the image pattern database 921 from the image feature data Sf of the original image from the feature extraction section 912 and the distinguishable information (Scd) inputted from the image pattern assignment section 914. The system control section 916 stores in the image filing region 922 the distinguishable information (Scd) corresponding to the original image data obtained as described above and the original image data Si in correspondence with each other.

As described in the foregoing, the image distinguishing apparatus according to the present invention has the image entrance section for entering an image, the image pattern database previously holding as image pattern data a plurality of data whose features are extracted, and the image pattern distinguishing section for calculating the similarity between two images. In the image distinguishing apparatus, image data representing the image inputted by the image entrance section and the image pattern data in the image pattern database are successively compared with each other in the image pattern distinguishing section, and a classification code corresponding to the most similar image pattern is outputted as image distinguishable information of the inputted image, so that the inputted image data can be automatically classified on a uniform criterion for judgment.

The image distinguishing apparatus has means for adding or reforming, when there exists no similar image pattern data in the image pattern database, new or existing image pattern data by the image pattern assignment section, thereby making it possible to further optimize the image pattern database and improve the precision of distinction between images.

Furthermore, the image pattern distinguishing section holds the range of a valid value for each of elements of the feature vectors extracted with respect to the image data, so that the images can be distinguished at high speed.

While the invention has been described in detail, the foregoing description is in all aspects illustrative and not restrictive. It is understood that numerous other modifications and variations can be devised without departing from the scope of the invention.

## Claims

1. An image distinguishing apparatus (IDDA) for distinguishing and classifying inputted images on a predetermined criterion, comprising:
an image data source (1) for supplying image data (Si) which is image information of an image to be distinguished;
image feature extraction means (3) for extracting the features of said image to produce first feature vector data (Sf: VjnC) on the basis of said image data (Si);
database means (5) for storing an image pattern database (IPDB) which is composed of image feature data (Ss(Ck, i)) each having second feature vector data (Ss : VjnCk) produced by extracting image features from a plurality of reference images and a code (Ck) for specifying said second feature vector data (Ss), said image feature distinguishing images belonging to an image group (Cj) having a certain common image feature from images belonging to another image group (Ci);
image data comparison means (7,70) for finding the similarity (DFV(Ck,i)) between said first feature vector data (Sf : VjnC) and each of said plurality of second feature vector data (Ss : VjnCk); and
image distinguishing means (7, 70) for outputting the code (Ck) of the image feature data (Ss(Ck, i)) whose second feature vector data is highest in said similarity (DFV(Ck, i)) to said first feature vector data as image distinguishable information (Sid) of said image data (Si).

2. The image distinguishing apparatus (IDDA) according to claim 1, wherein said image data comparison means (7, 70) comprises
distance-between-feature vectors measurement means (S530) for calculating the distance between said first feature vector data (Sf : VjnC) and said second feature vector data (Ss : VjnCk) and outputting the distance as a distance between feature vectors (DFV(Ck, i)), and the smaller the distance between feature vectors (DFV(Ck, i)) is, the higher the similarity is.

3. The image distinguishing apparatus (IDDA) according to claim 2, wherein said image data comparison means (7, 70) further comprises
similarly judgment means for judging, when said distance between feature vectors (DFV(Ck, i)) is not more than a predetermined value (Dth), that said second feature vector data (Ss : VjnCk) is similar to said first feature vector data (Sf : VjnC).

4. The image distinguishing apparatus (IDDA) according to claim 3, wherein said image data comparison means (7, 70) further comprises
similarity feature data detection means (S570, S580) for arranging said distances between feature vectors (DFV(Ck, i)) in ascending order of their values, and outputting a code (Ck) of the distance between feature vectors (DFV(Ck, i)) at the top as said image distinguishable information (Sid).

5. The image distinguishing apparatus (IDDA2) according to claim 1, further comprising image pattern database reformation means (13) for adding to reform, when said second feature vector data (Ss ; VjnCk) similar to said first feature vector data (Sf : VjnC, Sim) does not exist, the first feature vector data (Sf : VjnC, Sim) in said image pattern database (IPDB).

6. The image distinguishing apparatus (IDDA3) according to claim 1, wherein said image data comparison means (7R, 70R) holds the range of a valid value (Vei) with respect to each of feature vector terms (VjnC) of the first feature vector data (Sf : VjnC).

7. The image distinguishing apparatus (IDDA3) according to claim 6, wherein said image comparison means (7R, 70R) does not calculate the similarity (DFV(Ck, i)) when each of the feature vector terms (VjnC) of said first feature vector data (Sf : VjnC) is outside the range of the valid value (Vei).

8. An image distinguishing method for distinguishing and classifying inputted images on a predetermined criterion, comprising:
the step (#100) of inputting image data (Si) which is image information of an image to be distinguished;
the step (#300) of extracting the features of said image to produce first feature vector data (Sf : VjnC) on the basis of said image data (Si);
the step (#500 : S530) of calculating, in an image pattern database (IPDB) which is composed by image feature data (Ss(Ck, i)) each having second feature vector data (Ss : VjnCk) produced by extracting, with respect to each of a plurality of reference images having image features to be a criterion for distinguishing an image group (Cj) to which images having a certain common image feature belong from the other image group (Ci), the image features of the reference image and a code (Ck) for specifying the second feature vector data (Ss), the similarity (DFV(Ck, i)) between each of the plurality of second feature vector data (Ss : VjnCk) and said first feature vector data (Sf : VjnC); and
the step (#500 : S580) of outputting the code (Ck) of the image feature data (Ss(Ck, i)) having the second feature vector data which is highest in said similarity (DGV(Ck, i)) to the first feature vector data as image distinguishable information (Sid) of said image data (Si).

9. A recording medium having a computer program for controlling an image distinguishing apparatus (IDDA) for distinguishing and classifying inputted images on a predetermined criterion recorded thereon, the computer program realizing an operational environment comprising:
the step (#100) of inputting image data (Si) which is image information of an image to be distinguished;
the step (#300) of extracting the features of said image to produce first feature vector data (Sf : VjnC) on the basis of said image data (Si);
the step (#500 : S530) of calculating, in an image pattern database (IPDB) which is composed of image feature data (Ss(Ck, i)) each having second feature vector data (Ss : VjnCk) produced by extracting, with respect to each of a plurality of reference images having image features to be a criterion for distinguishing an image group (Cj) to which images having a certain common image feature belong from the other image group (Ci), the image features of the reference image and a code (Ck) for specifying the second feature vector data (Ss), the similarity (DFV(Ck, i)) between the plurality of second feature vector data (Ss : VjnCk) and said first feature vector data (Sf : VjnC); and
the step (#500 : S580) of outputting the code (Ck) of the image feature data (Ss(Ck, i)) having the second feature vector data which is highest in said similarity (DFV(Ck, i)) to the first feature vector data as image distinguishable information (Sid) of said image data (Si).
